# EUROPEAN PATENT SPECIFICATION

(11) **EP 1 798 910 B1**
(45) Date of publication and mention of the grant of the patent: **06.07.2011**
(21) Application number: 05380269.0
(22) Date of filing: 16.12.2005
(51) Int. Cl.: H04W 12/06

(54) **Method of requesting and sending authentification vectors**
Verfahren zur Anforderung und Übermittlung von Authentisierungsvektoren
Méthode pour demander et envoyer des vecteurs d'authentifications

(43) Date of publication of application: 20.06.2007
(73) Proprietor: Vodafone Group PLC, Newbury Berkshire RG14 2FN (GB)
(72) Inventor: Ochoa Giménez, Susana, 28037 Madrid (ES); Sendra Alcina, José Carlos, 28108 Alcobendas/Madrid (ES)
(74) Representative: Keston, David Arthur

(56) References cited:
- US-A1- 2003 159 067
- US-A1- 2003 200 433

## Description

### Field of the Invention

The present invention is encompassed within the field of mobile telecommunications, and more specifically in obtaining security information on the part of the IMS network.

### Background of the Invention

The HSS (Home Subscriber Service) is equipment storing all received subscriber-rolated information that is necessary for correctly setting up a multimedia connection. Its initial approach is to be the natural evolution of the current HLR (Home Location Register), incorporating the functions that the latter currently has and adding the new functionalities needed in the multimedia call environment. This new data that must be provided basically includes subscriber permissions in terms of the subscribed multimedia services and the usage profiles of these services.

An example can be found in US 2003/200433.

From this initial point of view, it seems that there is a clear separation between "old" functions inherited from the HLR and which are still required, and "new" functions required for providing the new multimedia services.

3GPP (Third Generation Partnership Program) standards define the HSS interfaces with the remaining network elements as well as the functions it must carry out according to the petitions that the network receives.

The possibility of implementing the HSS defined in the standards from the HLRs already existing in mobile operator networks and adding a single HSS containing the information not contemplated in the operators' HLRs has been considered. This vision is coherent with the perceptions of a clear separation between "old" and "new" functions and allows clear cost savings in a multioperator environment or in an operator with several HLRs.

However this separation is not so clear in some multimedia processes requiring access to subscriber authentication data. This required authentication data is generated in the AuC (Authentication Centre), which is traditionally associated with HLRs. This would present the need that in the context of a single multimedia process, for example subscriber registration, one entity, the HSS, would have to be initially accessed when access to service provision data is required and then another entity, the HLR/AuC would have to be accessed when authentication data is needed. This double access is currently impossible to implement without changing some parts of the architecture and/or protocols involved in the multimedia process.

The need therefore exists to find a solution to this access if the HLR/AuC are separate from the HSS entity that does not reduce network security or HSS functionality.

A glossary of terms used throughout the present specification is provided below:
- AuC: Authentication Centre
- AV: Authentication Vector
- CS: Circuit Switching
- GSM: Global System for Mobile Communications
- GPRS: General Packet Radio Service
- HLR: Home Location Register
- HSS: Home Subscriber Server
- IMS: IP Multimedia Subsystem
- IMSI: International Mobile Subscriber Identity
- IMPI: IP Multimedia Private Identity
- IMPU: IP Multimedia Public Identity
- ISIM: IMS Subscriber Identity Module
- MAP: Mobile Application Protocol/Part
- MSC: Mobile Switching Centre
- PS: Packet Switching
- SAI: Send Authentication Information
- S-CSCF: Serving Call Session Control Function
- SGSN: Serving GPRS Support Node
- USIM: UMTS Services Identity Module

### Description of the Invention

The invention relates to a method of requesting and sending at least one authentication vector AV between a Home Subscriber Server HSS and at least one Home Location Register HLR according to claim 1. Preferred embodiments of the method are defined in the dependent claims.

The present invention provides a method of communication between a single HSS and the HLR/AuC element or elements of one or several operators to solve the problem discussed in the foregoing regarding communication between an HSS entity and the HLR/AuC elements inherited from GSM/UMTS networks.

Thus the present invention relates to a method of requesting and sending at least one authentication vector AV between an HSS and at least one HLR, said HSS being connected to at least one IMS telecommunications network, and each HLR having an AuC configured to generate authentication vectors AVs.

The method comprises the steps of:
- the HSS receiving through the IMS network a first message requesting at least one authentication vector AV to authenticate a subscriber X who requests an IMS service, said subscriber being identified by his or her IP Multimedia Private Identity IMPI,
- the HSS processing said first message and sending a second message to the HLR,
- the HLR determining if the AV request is from an IMS service or from a GSM/GPRS or UMTS service based on the information contained in said second message,
- said HLR AuC generating said at least one authentication vector AV with a key associated to the subscriber, said key being a key Ki associated to the subscriber's IMPI identity if it is an IMS service, or a key Ki' associated to a subscriber's IP Multimedia Public Identity IMSI if it is a GSM/GPRS or UMTS service,
- the HLR generating a third message containing said at least one authentication vector AV and sending it to the HSS,
- the HSS processing said third message and the HSS sending a fourth message containing said at least one authentication vector AV to the IMS network.
   The telecommunications network can include two or more HLRs connected to a single HSS, and in such case said single HSS is configured to identify which of said two or more HLRs must request the generation of at least one authentication vector AV based on the information contained in the IMPI or IMSI identity associated to the subscriber X.
   According to a preferred embodiment, said first and second messages are identical to one another and said third and fourth messages are identical to one another and the processing in the HSS consists of receiving them and rerouting them to the HLR and to the IMS network, respectively. More preferably, said first, second, third and fourth messages are DIAMETER messages. In this embodiment, the HLR is capable of processing the DIAMETER message received and obtaining the IMPI and the number *m* of AVs required, passing these parameters along to the AuC for the generation of at least one authentication vector AV.
   According to another aspect of the invention, the HLR is capable of encapsulating the at least one AV generated by the AuC in a DIAMETER message so as to then forward it to the HSS requesting it.
   According to another preferred embodiment,
- said first message is a DIAMETER message and the HSS processes it, generating said second message which is a MAP message,
- and said third message is a MAP message and the HSS processes it, generating said fourth message which is a DIAMETER message.

To that end, the HSS is preferably provided with information related to the IMSI identity associated to said subscriber X and the HSS performs a mapping between the IMPI and IMSI identities. In this case, said second message can include a "requesting node type" field which can have the value '2', indicating that the authentication vector request is from a node, for example an IMS network S-CSCF node. To that end the HLR is preferably provided with information related to the IMPI identity associated to said subscriber X, and because the HLR can perform a mapping between the IMSI and IMPI identities, required if said "requesting node type" field of said MAP message has the value "2".

In this case, the HSS has the ability to "translate" the messages for requesting and receiving AVs between the IMS network and the HLR/AuC; this entails:
- on one hand, a module that correctly translates the suitable fields of the DIAMETER message to the MAP message, and vice versa, for the purpose of generating the messages described in the foregoing; and
- on the other hand, obtaining the subscriber's IMSI identity from his or her IMPI identity.

The HSS is further capable of identifying which HLR/AuC it must forward the MAP message to. It can know which HLR/AuC belongs to the subscriber by means of either the subscriber's IMSI or IMPI.

Increasing the possible values of the "Requesting node type" parameter allows the generation of AVs in the AuC to be done"from the key Ki associated to the IMPI identity.

Without this change, the HLR/AuC would select the Ki associated to the subscriber's IMSI, generating the AVs for the GSM/GPRS, UMTS and IMS domains with the same key Ki and forcing the subscriber's UICC card to have the same key Ki stored in the USIM and ISIM modules.

The possibility of having different provisions for USIM and ISIM for all subscriber identification data (different Kis and different algorithms for CS/PS domains and IMS domains) is provided for by means of the present invention.

### Brief Description of the Drawings

A series of drawings will be very briefly described below which will help to better understand the invention and which are expressly related to an embodiment of said invention provided as a non-limiting example thereof.

Figure 1 shows a diagram of a first possible embodiment for the present invention in which a MAP protocol is used between the HSS and HLR/AuCs.

Figure 2 schematically shows how messages are exchanged between HSS and HLR/AuC for the embodiment shown in Figure 1.

Figure 3 shows a diagram of a second possible embodiment for the present invention in which the DIAMETER protocol between HSS and HLR/AuC is used.

Figure 4 schematically shows how messages are exchanged between HSS and HLR/AuC for the embodiment shown in Figure 3.

### Description of a Preferred Embodiment of the Invention

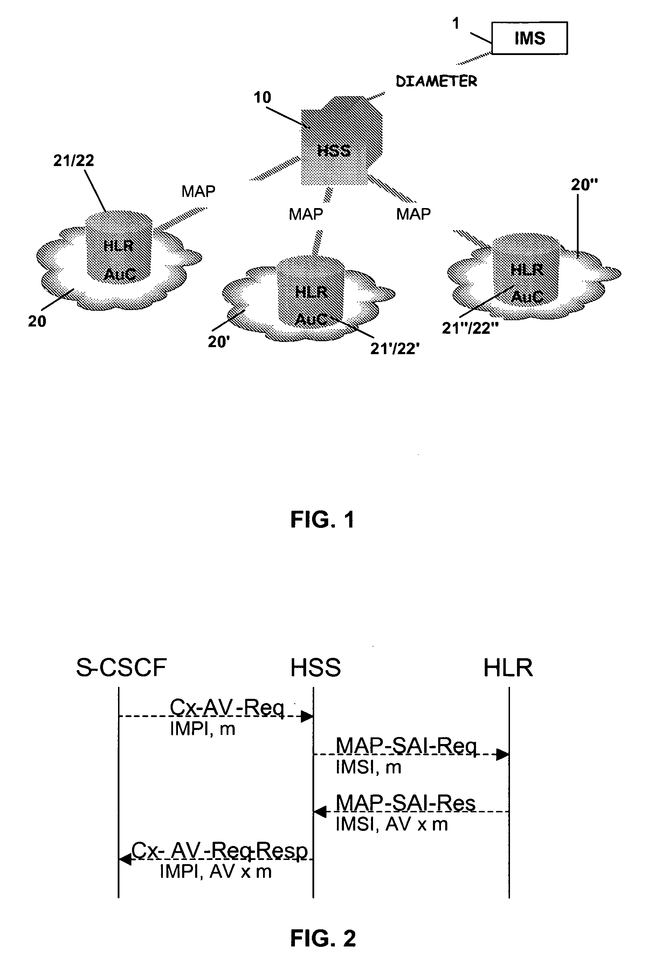

Figure 1 shows a diagram of a possible embodiment for the present invention in which a MAP protocol between the HSS (10) and the HLR/AuC (21/22, 21'/22', 21"/22") is used.

In this case virtually all the queries that the IMS network (1) may make to the HSS would be directly resolved by the HSS node with the exception of one: the request and receipt of authentication vectors AVs, for which task the HSS must send the message to the HLR/AuC and then the response of the HLR/AuC to the network.

This forwarding of messages between the IMS network (specifically the S-CSCF node) and HLR/AuC and through the HSS in this case entails a change in protocol and some modification in the HSS and HLR/AuC nodes with respect to how they are defined in the standard.

The request and receipt of the authentication vectors AVs (or security quintuplets) is carried out by means of a message exchange, which is schematically shown in the diagram of Figure 2.

Through the S-CSCF node, the IMS network sends to the only HSS for one or several operators (20, 20', 20") a request for an authentication vector AV using the DIAMETER protocol, indicating the number m of AVs requested and the corresponding subscriber, identifying him or her with his or her IMS Private Identity (IMPI) ("Cx-AV-Req" message).

The standard HLR/AuC does not understand DIAMETER. In its interactions with the GSM/GPRS and UMTS networks, when the network (whether it is the MSC or SGSN) requests a number of new AVs for a subscriber it does so using the MAP protocol and identifying the subscriber with his or her IMSI identity.

Therefore the HSS makes this change so that the HLR/AuC can understand the request and carry it out.

The MAP message ("MAP-SAI-Req") is called "Send Authentication Info" SAI, and the parameters that the HSS is capable of mapping are:
- "Number of requested vectors" *m*: Obtained from the number of vectors that the IMS network requests by means of its DIAMETER message.
- "IMSI": It needs to obtain the subscriber's IMSI from his or her IMPI.
- "Requesting node type": With value "2".

This last point entails an amendment to the standard MAP protocol. In the 3GPP TS29.002 standard (Releases 4 and 5), this parameter of the SAI message includes only two options:
- '0' to indicate that the request is from the MSC node (GSM network or the UMTS network CS domain).
- '1' to indicate that the request is from the SGSN node (GPRS network or the UMTS network PS domain).

This embodiment of the invention adds the value '2' to indicate that the request is from the S-CSCF node (IMS network).

Upon receiving the "Send Authentication Info" MAP message, the HLR/AuC knows how to process it and respond appropriately, according to the standard, with the exception for the "Requesting node type" parameter. When the HLR/AuC receives an SAI message with the value '2' in the "Requesting node type" parameter, it must perform the following process:
■ Obtain the subscriber's IMSI from the MAP message.
■ Obtain the IMPI identity from the subscriber's IMSI.
■ Select the Ki associated to the obtained IMPI.
■ Generate the required AVs from this Ki.

The HLR returns a message ("MAP-SAI-Res") to the HSS with the AVs generated by the authentication centre AuC, and the HSS changes to DIAMETER and sends the message ("Cx-AV-Req-Resp") with the IMPI identity and the generated AVs to the IMS network.

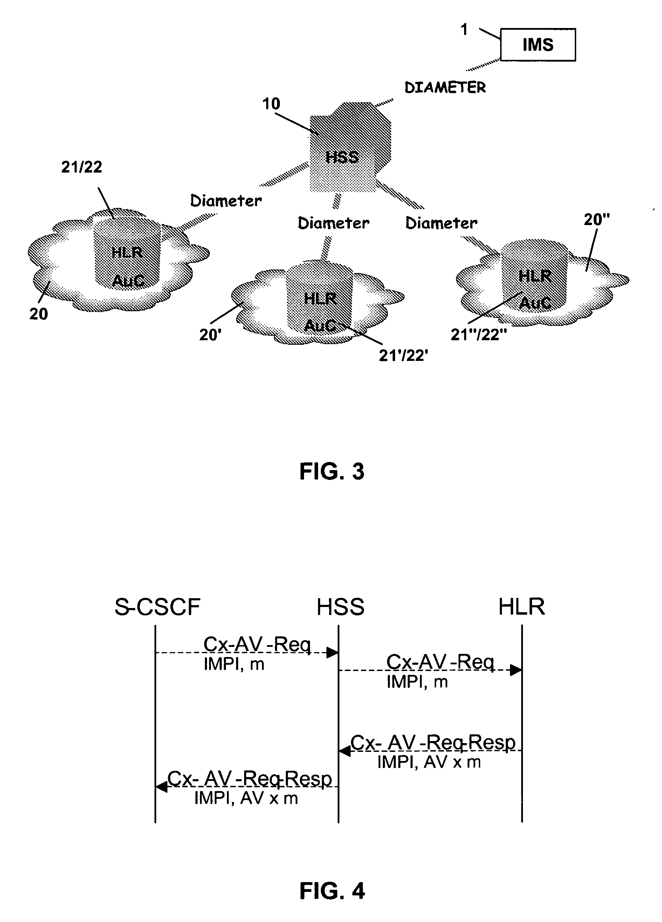

Figure 3 shows a diagram of another possible embodiment for the present invention, in which the DIAMETER program is used between the HSS (10) and HLR/AuC (21/22, 21'/22', 21 "/22").

In this case as well, virtually all the queries that the IMS network could make to the HSS would be directly resolved by the HSS node with the exception of one: the request and receipt of AVs, for which task the HSS must forward the message to the HLR/AuC and then the response of the HLR/AuC to the network.

This forwarding of messages between the IMS network (S-CSCF) and HLR/AuC and through the HSS in this case entails that the HLR/AuC nodes must be capable of processing DIAMETER messages.

Through the S-CSCF node, the IMS network sends to the HSS a request for AVs using the DIAMETER protocol, indicating the number of AVs requested and the corresponding subscriber, identifying him or her with his or her IMS Private Identity (IMPI). The HSS resends this DIAMETER message directly to the appropriate HLR/AuC.

In this case, the HLR/AuC must know how to process the DIAMETER message requesting the AVs and be capable of sending the AVs generated also by means of DIAMETER.

The request and receipt of the authentication vectors AVs (or security quintuplets) is done by means of a message exchange, which is schematically shown in the diagram of Figure 4.

Upon receiving the "Cx-AV-Req" DIAMETER message, the HSS is capable of resending it to the subscriber's HLR/AuC. To that end, it is capable of identifying the address of the HLR/AuC subscriber is subscribed to with the subscriber's IMPI.

Upon receiving the "Cx-AV-Req" DIAMETER message, the HLR must be capable of processing the message and obtaining the subscriber's IMPI and the required number of AVs in order to pass this information along to the AuC. Thus, the AuC generates the requested number of AVs from the key Ki associated to that IMPI identity and returns them to the HLR.

Once the AVs are generated, the HLR is capable of encapsulating them in a "Cx-AV-Req-Resp" DIAMETER message to send them to the HSS which in turn sends them to the IMS network that requested them.

## Claims

1. A method of requesting and sending at least one authentication vector further abreviated as AV, between a Home Subscriber Server HSS (10) and at least one Home Location Register HLR (21, 21', 21"), said HSS being connected to at least one telecommunications network with an IP Multimedia Subsystem IMS, and said HLR having an authentication centre (22, 22', 22") AuC configured to generate authentication vectors AVs, **characterized in that** the method comprises the steps of:
- the HSS receiving through the IMS network a first message requesting at least one authentication vector AV to authenticate a subscriber who requests an IMS service, said subscriber being identified by his or her IP Multimedia Private Identity IMPI,
- the HSS processing said first message and sending a second message to the HLR,
- the HLR determining if the AV request is from an IMS service or from a GSM/GPRS or UMTS service, based on the information contained in said second message,
- said HLR AuC generating said at least one authentication vector AV with a key associated to the subscriber, said key being a key Ki associated to the subscriber's IMPI identity if it is an IMS service, or a key Ki' associated to a subscriber's IP Multimedia Public Identity IMSI if it is a GSM/GPRS or UMTS service,
- the HLR generating a third message containing said at least one authentication vector AV and sending it to the HSS,
- the HSS processing said third message and the HSS sending a fourth message containing said at least one authentication vector AV to the IMS network.

2. A method according to claim 1, **characterized in that** said first and second messages are identical to one another and said third and fourth messages are identical to one another and the processing in the HSS consists of receiving them and rerouting them to the HLR and to the IMS network, respectively.

3. A method according to claim 2, **characterized in that** said first, second, third and fourth messages are DIAMETER messages.

4. A method according to claim 3, **characterized in that** the HLR is capable of processing the received DIAMETER message and obtaining the IMPI and the required number m of AVs, passing these parameters along to the AuC for the generation of at least one authentication vector AV.

5. A method according to any of claims 2-4, **characterized in that** the HLR is capable of encapsulating the at least one AV generated by the AuC in a DIAMETER message to then forward it to the HSS that requested it.

6. A method according to claim 1, **characterized in that**
- said first message is a DIAMETER message and the HSS processes it, generating said second message which is a MAP message,
- and **in that** said third message is a MAP message and the HSS processes it, generating said fourth message which is a DIAMETER message.

7. A method according to claim 6, **characterized by** the provision in the HSS of information related to the IMSI identity associated to said subscriber and in that the HSS performs a mapping between the IMPI and IMSI identities.

8. A method according to any of claims 6-7, **characterized in that**
- said second message includes a "requesting node type" field which can have the value '2', indicating that the request for an authentication vector comes from an IMS network node.

9. A method according to claim 8, **characterized by** the provision in the HLR with information related to the IMPI identity associated to said subscriber, and in that the HLR can perform a mapping between the IMSI and IMPI identities, which is required if said "requesting node type" field of said MAP message has the value "2".

10. A method according to any of the previous claims, **characterized in that**
- the telecommunications network includes two or more HLRs connected to a single HSS, and
- said HSS is configured to identify which of said two or more HLRs must request the generation of at least one authentication vector AV based on the information contained in the IMPI or IMSI identity associated to the subscriber.

## Patentansprüche

1. Verfahren zum Anfordern und Senden von wenigstens einem Authentifizierungsvektor (nachfolgend AV abgekürzt) zwischen einem Heimabonnentenserver (HSS = Home Subscriber Server) (10) und wenigstens einem Heimatregister (HLR = Home Location Register) (21, 21', 21"), wobei der genannte HSS mit wenigstens einem Telekommunikationsnetzwerk mit einem IP-Multimedia-Subsystem IMS verbunden ist und das genannte HLR ein Authentifizierungszentrum AuC (22, 22', 22") hat, das zum Erzeugen von Authentifizierungsvektoren AVs konfiguriert ist,
**dadurch gekennzeichnet, dass** das Verfahren die folgenden Schritte beinhaltet:
- Empfangen, durch den HSS, einer ersten Nachricht durch das IMS-Netzwerk, die wenigstens einen Authentifizierungsvektor AV zum Authentifizieren eines Abonnenten anfordert, der einen IMS-Dienst anfordert, wobei der genannte Abonnent anhand seiner IP Multimedia Private Identity IMPI identifiziert wird,
- Verarbeiten, durch den HSS, der genannten ersten Nachricht und Senden einer zweiten Nachricht zum HLR,
- Ermitteln, durch das HLR, ob die AV-Anforderung von einem IMS-Dienst oder von einem GSM/GPRS- oder UMTS-Dienst kommt, auf der Basis der in der genannten zweiten Nachricht erhaltenen Informationen,
- Erzeugen, durch das genannte HLR AuC, des genannten wenigstens einen Authentifizierungsvektors AV mit einem mit dem Abonnenten assoziierten Schlüssel, wobei der genannte Schlüssel ein mit der IMPI-Identität des Abonnenten assoziierter Schlüssel Ki ist, wenn es sich um einen IMS-Dienst handelt, oder ein mit der IP Multimedia Public Identity IMSI des Abonnenten assoziierter Schlüssel Ki' ist, wenn es sich um einen GSM/GPRS- oder einen UMTS-Dienst handelt,
- Erzeugen, durch das HLR, einer dritten Nachricht, die den genannten wenigstens einen Authentifizierungsvektor AV enthält, und Senden derselben zum HSS,
- Verarbeiten, durch den HSS, der genannten dritten Nachricht und Senden, durch den HSS, einer vierten Nachricht, die den genannten wenigstens einen Authentifizierungsvektor AV enthält, zu dem IMS-Netzwerk.

2. Verfahren nach Anspruch 1, **dadurch gekennzeichnet, dass** die genannte erste und die genannte zweite Nachricht miteinander identisch sind und die genannte dritte und die genannte vierte Nachricht miteinander identisch sind und die Verarbeitung im HSS darin besteht, sie zu empfangen und sie jeweils zum HLR bzw. zum IMS-Netzwerk umzuleiten.

3. Verfahren nach Anspruch 2, **dadurch gekennzeichnet, dass** die genannte erste, zweite, dritte und vierte Nachricht DIAMETER-Nachrichten sind.

4. Verfahren nach Anspruch 3, **dadurch gekennzeichnet, dass** das HLR die empfangene DIAMETER-Nachricht verarbeiten und die IMPI und die benötigte Anzahl m von AVs holen und diese Parameter zum AuC zum Erzeugen von wenigstens einem Authentifizierungsvektor AV leiten kann.

5. Verfahren nach einem der Ansprüche 2-4, **dadurch gekennzeichnet, dass** das HLR den wenigstens einen vom AuC erzeugten AV in einer DIAMETER-Nachricht verkapseln und dann zu dem HSS weiterleiten kann, der ihn angefordert hat.

6. Verfahren nach Anspruch 1, **dadurch gekennzeichnet, dass**
- die genannte erste Nachricht eine DIAMETER-Nachricht ist und der HSS sie verarbeitet, so dass die genannte zweite Nachricht erzeugt wird, die eine MAP-Nachricht ist,
- und **dadurch**, dass die genannte dritte Nachricht eine MAP-Nachricht ist und der HSS sie verarbeitet, so dass die genannte vierte Nachricht erzeugt wird, die eine DIAMETER-Nachricht ist.

7. Verfahren nach Anspruch 6, **gekennzeichnet durch** das Bereitstellen, im HSS, von Informationen über die mit dem genannten Abonnenten assoziierte IMSI-Identität, und **dadurch**, dass der HSS ein Mapping zwischen den IMPI- und IMSI-Identitäten durchführt.

8. Verfahren nach einem der Ansprüche 6-7, **dadurch gekennzeichnet, dass**:
- die genannte zweite Nachricht ein "requesting node type"-(fordert Knotentyp an)-Feld enthält, das den Wert '2' haben kann, der anzeigt, dass die Anforderung eines Authentifizierungsvektors von einem IMS-Netzwerkknoten kommt.

9. Verfahren nach Anspruch 8, **gekennzeichnet durch** das Bereitstellen, im HLR, von Informationen über die mit dem genannten Abonnenten assoziierte IMPI-Identität, und **dadurch**, dass das HLR ein Mapping zwischen den IMSI- und IMPI-Identitäten ausführen kann, das nötig ist, wenn das genannte "requesting node type"-Feld der genannten MAP-Nachricht den Wert "2" hat.

10. Verfahren nach einem der vorherigen Ansprüche, **dadurch gekennzeichnet, dass**:
- das Telekommunikationsnetzwerk zwei oder mehr mit einem einzigen HSS verbundene HLRs beinhaltet;
- der genannte HSS so konfiguriert ist, dass er identifiziert, welches der zwei oder mehr HLRs die Erzeugung von wenigstens einem Authentifizierungsvektor AV anfordern muss, auf der Basis der Informationen, die in der mit dem Abonnenten assoziierten IMPI- oder IMSI-Identität enthalten sind.

## Revendications

1. Procédé servant à demander et à envoyer au moins un vecteur d'authentification, désigné ci-après par l'abréviation AV, entre un serveur d'abonnés résidentiels HSS (10) et au moins un registre des positions de rattachement HLR (21, 21', 21"), ledit HSS étant connecté à au moins un réseau de télécommunications avec un sous-système multimédia IP IMS, et ledit HLR possédant un centre d'authentification (22, 22', 22") AuC lequel est configuré pour générer des vecteurs d'authentification AV, **caractérisé en ce que** le procédé comprend les étapes suivantes :
- la réception par le HSS, par l'intermédiaire du réseau IMS, d'un premier message demandant au moins un vecteur d'authentification AV afin d'authentifier un abonné qui demande un service IMS, ledit abonné étant identifié par son identité privée multimédia IP, IMPI,
- le traitement par le HSS dudit premier message et l'envoi d'un deuxième message au HLR,
- la détermination par le HLR pour savoir si la demande d'AV provient d'un service IMS ou d'un service GSM/GPRS ou UMTS, sur la base des informations contenues dans ledit deuxième message,
- la génération par ledit centre AuC de HLR dudit au moins un vecteur d'authentification AV avec une clé qui est associée à l'abonné, ladite clé étant une clé Ki associée à l'identité d'abonné IMPI s'il s'agit d'un service IMS, ou bien une clé Ki' associée à une identité publique multimédia IP IMSI s'il s'agit d'un service GSM/GPRS ou UMTS,
- la génération par le HLR d'un troisième message contenant ledit au moins un vecteur d'authentification AV et l'opération consistant à l'envoyer au HSS,
- le traitement par le HSS dudit troisième message et l'envoi, par le HSS, d'un quatrième message contenant ledit au moins un vecteur d'authentification AV au réseau IMS.

2. Procédé selon la revendication 1, **caractérisé en ce que** lesdits premier et deuxième messages sont identiques l'un par rapport à l'autre, et lesdits troisième et quatrième messages sont identiques l'un par rapport à l'autre, et le traitement au sein du HSS consiste à les recevoir et à les rediriger vers le HLR et vers le réseau IMS, respectivement.

3. Procédé selon la revendication 2, **caractérisé en ce que** lesdits premier, deuxième, troisième et quatrième messages sont des messages DIAMETER.

4. Procédé selon la revendication 3, **caractérisé en ce que** le HLR est apte à traiter le message DIAMETER ayant été reçu et d'obtenir l'IMPI et le nombre requis *m* d'AV, d'acheminer ces paramètres au centre AuC en vue de la génération d'au moins un vecteur d'authentification AV.

5. Procédé selon l'une quelconque des revendications 2 à 4, **caractérisé en ce que** le HLR est apte à encapsuler ledit au moins un AV généré par le centre AuC dans un message DIAMETER afin de le transmettre ensuite au HSS qui l'a demandé.

6. Procédé selon la revendication 1, **caractérisé en ce que**
- ledit premier message est un message DIAMETER et le HSS en assure le traitement, générant ainsi ledit deuxième message qui est un message MAP,
- et **en ce que** ledit troisième message est un message MAP et le HSS en assure le traitement, générant ainsi ledit quatrième message qui est un message DIAMETER.

7. Procédé selon la revendication 6, **caractérisé par** la mise à disposition, au sein du HSS, d'informations liées à l'identité IMSI associée audit abonné et en ce que le HSS exécute un mappage entre l'identité IMPI et l'identité IMSI.

8. Procédé selon l'une quelconque des revendications 6 à 7, **caractérisé en ce que**
- ledit deuxième message comporte un champ « demande de type de noeud » qui peut avoir la valeur « 2 », indiquant ainsi que la demande pour un vecteur d'authentification émane d'un noeud de réseau IMS.

9. Procédé selon la revendication 8, **caractérisé par** la mise à disposition, au sein du HLR, d'informations liées à l'identité IMPI associée audit abonné, et en ce que le HLR peut exécuter un mappage entre l'identité IMSI et l'identité IMPI, qui est requis si ledit champ « demande de type de noeud » dudit message MAP possède la valeur « 2 ».

10. Procédé selon l'une quelconque des revendications précédentes, **caractérisé en ce que**
- le réseau de télécommunications comporte deux ou plusieurs HLR lesquels sont connectés à un seul HSS, et
- ledit HSS est configuré de façon à identifier lequel desdits deux ou plusieurs HLR doit demander la génération d'au moins un vecteur d'authentification AV sur la base des informations contenues dans l'identité IMPI ou IMSI associée à l'abonné.
